# FASCICULE DE BREVET EUROPEEN

(11) **EP 3 793 797 B1**
(45) Date de publication et mention de la délivrance du brevet: **22.03.2023**
(21) Numéro de dépôt: 19742425.2
(22) Date de dépôt: 13.05.2019
(51) Int. Cl.: B29C 48/49, B29C 48/21, B29C 48/07, B29C 48/475, B29C 48/37, B29C 48/025, B29C 48/255, B29C 48/375, B29C 48/455

(54) **INSTALLATION ET PROCÉDÉ D'EXTRUSION POUR DES PROFILES COMPLEXES EN MELANGES ELASTOMERIQUES**
SYSTEM UND VERFAHREN ZUM EXTRUDIEREN VON KOMPLEXEN PROFILEN AUS ELASTOMERMISCHUNGEN
SYSTEM AND METHOD FOR EXTRUDING COMPLEX PROFILES FROM ELASTOMER MIXTURES

(30) Priorité: 14.05.2018 FR 1854016
(43) Date de publication de la demande: 24.03.2021
(73) Titulaire: COMPAGNIE GENERALE DES ETABLISSEMENTS MICHELIN, 63000 Clermont-Ferrand (FR)
(72) Inventeur: HINC, Henri, 63040 Clermont-Ferrand Cedex 9 (FR); LETOCART, Arnaud, 63040 Clermont-Ferrand Cedex 9 (FR); OUGIER, Christophe, 63040 Clermont-Ferrand Cedex 9 (FR)
(74) Mandataire: Redouté, Gilles Pierre
(86) Numéro de dépôt international: PCT/FR2019/051071
(87) Numéro de publication internationale: WO 2019/220044

(56) Documents cités:
- FR-A1- 3 045 441
- FR-A1- 3 058 352
- JP-A- 2004 216 725
- US-A1- 2012 161 366

## Description

L'invention concerne le domaine de l'extrusion des mélanges élastomériques destinés à la fabrication des pneumatiques. Plus particulièrement, elle concerne la fabrication de profilés complexes coextrudés à base de mélanges élastomériques telles les bandes de roulement pour pneumatiques.

De manière connue, on réalise une bande de roulement pour pneumatique sous forme de profilé complexe par coextrusion de mélanges élastomériques, dont la plupart ont des compositions différentes, en utilisant plusieurs extrudeuses reliées à une tête d'extrusion commune. De manière connue, une extrudeuse est formée d'un corps cylindrique ou fourreau fixe à l'intérieur duquel se trouve une vis d'Archimède coaxiale à l'axe longitudinal du fourreau et qui est entraînée en rotation autour de celui-ci. Elle a pour fonction d'homogénéiser un mélange caoutchouteux qui y est introduit et de le pousser vers la filière de sortie de la tête d'extrusion. Pour un produit complexe, la filière de sortie reçoit plusieurs mélanges d'élastomères de compositions différentes agencés côte-à-côte et qui se rejoignent avant la sortie. La filière comporte un orifice de sortie dont la forme géométrique détermine le profil de la bande de caoutchouc coextrudée. Ce profil peut être défini entre une lame profilée fixe qui coopère avec un rouleau rotatif ou avec une paroi fixe.

Pour fabriquer une bande de roulement par coextrusion, on utilise en général une extrudeuse par type de mélange élastomérique (par type on comprend composition de celui-ci), les dimensions de l'extrudeuse (le diamètre de la vis d'extrusion) étant choisies proportionnellement au volume de mélange extrudé. Par exemple, pour une bande de roulement dont la partie externe destinée au roulement représente 80% du volume et à laquelle on adjoint une sous-couche pour environ 15% du volume et deux bords latéraux représentant ensemble les 5% restants, on utilise généralement trois extrudeuses : une première plus grande dont le diamètre de la vis est de 250mm, une deuxième pour la sous-couche ayant un diamètre de la vis de 200mm et une troisième petite extrudeuse ayant un diamètre de 120mm.

A présent, on cherche à améliorer la performance des pneumatiques via des bandes de roulements plus complexes et qui comportent davantage de composants, par exemple jusqu'à sept composants différents, avec des proportions de volume très variables entre les divers composants. Chaque composant a ses propriétés bien définies, par exemple la partie de roulement située à l'extérieur de la bande profilée comprend une composition élastomérique comportant de la silice à bonne propriétés de résistance au roulement, supportée par une bande élastomérique de composition différente à propriétés d'amortissement, avec une petite bande de mélange élastomérique conducteur qui est insérée dans les deux précédentes, le tout supporté par une sous-couche à bonnes propriétés d'adhérence avec les composants situés radialement à l'intérieur de l'ébauche de pneumatique, ainsi que des bords latéraux en un mélange différent des précédents, voire un mélange qui incorpore des chutes mixtes. Ainsi, chaque mélange ayant des propriétés différentes d'un autre, il est évidement nécessaire d'augmenter le nombre d'extrudeuses pour fabriquer une telle bande de roulement complexe. Dans le cas des bandes de roulement complexes, il est difficile de maîtriser la géométrie du produit en sortie de la filière d'extrusion, car chaque voie (chaque extrudeuse) est étalonnée à des paramètres de fonctionnement propres (notamment en terme de débit et de pression fournis), mais ces paramètres varient au niveau du passage du mélange à travers la filière commune en fonction de paramètres des extrudeuses qui alimentent les autres voies. Il en résulte, d'une part, un temps assez important de mise en service de l'installation et, d'autre part, des rebuts qui sont de surcroît sous forme de chutes mixtes, donc difficilement réutilisables.

Pour pallier à ce problème, la demande de brevet WO2017/109419 au nom de la demanderesse propose une installation d'extrusion pour réaliser une bande de roulement qui utilise des extrudeuses volumétriques bi-vis contrarotatives à filets interpénétrés et profils conjugués. Lorsqu'on utilise de telles extrudeuses volumétriques bi-vis pour chacune des voies de l'installation, on assure la maîtrise du débit et donc la maîtrise de la géométrie du produit dès le lancement de l'opération de coextrusion. Fonctionnant à satisfaction, il s'est toutefois avéré qu'une telle installation devient vite complexe lorsque le nombre des voies est important, par exemple supérieur à quatre.

Un objectif de l'invention est de remédier aux inconvénients ici rappelés et de proposer une installation d'extrusion de construction optimisée et économique, tout en permettant d'obtenir un produit coextrudé de bonne qualité.

Cet objectif est atteint par l'invention qui propose une installation d'extrusion pour fabriquer une bande de profilé, telle une bande de roulement à base de mélanges élastomériques par coextrusion, comportant plusieurs extrudeuses d'alimentation en mélanges élastomériques d'une tête d'extrusion, caractérisé en ce que la tête d'extrusion reçoit une proportion de mélange élastomérique comprise entre 2 à 25% du volume total débité par l'installation à partir d'au moins une extrudeuse à vis d'Archimède et le reste à partir d'extrudeuses volumétriques.

Par volume total débité par l'installation, on comprend le volume de matériau qui traverse la tête d'extrusion (qui comporte la filière de sortie) dans un intervalle de temps donné. Plusieurs mélanges différents, ayant chacun des propriétés physico-chimiques spécifiques, constituent les produits qui entrent, dans des proportions variables, dans la constitution d'une bande de roulement complexe. Le volume occupé par chacun de ces produits par rapport au volume total de la bande de roulement varie en fonction de la recette choisie. Selon l'invention, on alimente directement la tête d'extrusion à partir d'extrudeuses à vis d'Archimède, non volumétriques, pour une faible proportion du volume débité par la tête d'extrusion, de préférence inférieure à 25% du volume total. L'installation comprend également des extrudeuses volumétriques pour alimenter directement la tête d'extrusion pour la plus grande partie du volume de mélanges élastomériques débité par la même tête, notamment le volume restant qui est de maximum 75% du volume total débité par la tête.

Ceci permet d'obtenir une maîtrise rapide du débit dès le démarrage de l'installation pour une construction compacte de celle-ci. En effet, le volume débité par les voies non volumétriques est faible en comparaison avec le volume total débité et, même s'il y a des variations du débit en provenance des voies non volumétriques, sa variation est négligeable, ce qui permet d'obtenir une bande extrudée correctement dimensionnée et cela dès le début du tirage. Par ailleurs, les extrudeuses non volumétriques sont de construction simplifiée et occupent moins de place car elles comportent un nombre assez faible de composants (comparé aux extrudeuses volumétriques) et ont des dimensions nominales (diamètre et longueur de la vis d'extrusion) faibles, car elles sont en lien direct avec le débit faible que doit fournir l'extrudeuse.

De préférence, les filets de la vis de l'extrudeuse à vis d'Archimède sont peu profonds, la hauteur du filet étant inférieure à 0,2 la valeur du diamètre de la vis, pour un pas court, dont la valeur est inférieure à 1,5 la valeur du diamètre de la vis. Une telle extrudeuse de géométrie optimisée permet une meilleure maîtrise du débit.

De préférence encore, la longueur de la vis de l'extrudeuse à vis d'Archimède est supérieure à 8 fois la valeur de son diamètre. Ceci permet d'obtenir un débit stabilisé et donc mieux maîtrisé.

Avantageusement les extrudeuses volumétriques sont des extrudeuses volumétriques bi-vis contrarotatives à filets interpénétrés et profils conjugués. De telles extrudeuses volumétrique assurent un débit maîtrisé et constant dans le temps, tout en présentant un encombrement qui les rendent compatibles avec une installation de coextrusion.

De préférence, la tête d'extrusion comporte des canaux de distribution des mélanges élastomériques en provenance des extrudeuses vers une filière de sortie et l'extrudeuse à vis d'Archimède est reliée à la filière de sortie par un canal de longueur inférieure à celle des canaux de distribution des autres extrudeuses. Le canal de distribution qui relie la filière de sortie à l'extrudeuse à vis d'Archimède est plus fin (la superficie de sa section transversale étant bien inférieure à celle des voies volumétriques) et son agencement proche de la sortie permet de réduire la valeur de la pression de poussée que doit exercer l'extrudeuse à vis d'Archimède et d'optimiser ainsi la perte de charge.

Avantageusement, les canaux de distribution s'étendent dans une direction sensiblement perpendiculaire à la direction d'écoulement des flux des mélanges élastomériques en provenance desdites extrudeuses. Une telle solution permet d'avoir une meilleure cohésion des deux mélanges et d'éviter tout problème d'interface entre les deux.

De préférence, les extrudeuses sont agencées de part et d'autre de la tête par rapport à un plan de symétrie passant par l'orifice de sortie de la filière. Cette solution permet un meilleur équilibrage des flux en provenance des différentes extrudeuses.

Avantageusement, la tête d'extrusion est reliée directement aux extrudeuses sans qu'il y ait de canal de transfert de mélange d'élastomère entre les deux. Ainsi, l'extrémité de la vis de chaque extrudeuse arrive sensiblement au niveau de l'orifice d'entrée correspondant dans la tête d'extrusion, ce qui réduit fortement la perte de charge. On peut ainsi utiliser le volume restant pour aménager des canaux d'entrée dans la tête d'extrusion plus larges que ceux des extrudeuses de l'état de la technique, ce qui permet de réduire l'échauffement du mélange et d'accroitre la productivité de la machine.

De préférence, les extrudeuses à vis d'Archimède sont identiques et les extrudeuses volumétriques sont identiques entre elles. On facilite ainsi la maintenance de l'installation.

Avantageusement, la tête d'extrusion comprend un ensemble de plusieurs plaques amovibles disposées côte-à-côte. Une telle construction à plaques amovibles permet d'obtenir une tête d'extrusion de construction simplifiée et flexible.

Le but de l'invention est également atteint avec un procédé de fabrication de bande de profilé, telle une bande de roulement à à base de mélanges élastomériques par coextrusion à l'aide d'une installation comportant plusieurs extrudeuses d'alimentation en mélanges élastomériques d'une tête d'extrusion, caractérisé en ce qu'on fait passer simultanément à travers la tête d'extrusion une proportion de mélange élastomérique comprise entre 2 à 25% (du volume total débité par l'installation à partir d'au moins une extrudeuse à vis d'Archimède et le reste à partir d'extrudeuses volumétriques.

L'invention sera mieux comprise grâce à la suite de la description, qui s'appuie sur les figures suivantes :
- la figure 1 est une vue en perspective d'un exemple de bande de roulement obtenue avec l'installation de l'invention;
- la figure 2 est une vue en perspective schématisée de l'installation d'extrusion de l'invention ;
- la figure 3 est une vue schématique en coupe longitudinale de l'installation de la figure 2.

Sur les différentes figures, les éléments identiques ou similaires portent la même référence. Leur description n'est donc pas systématiquement reprise.

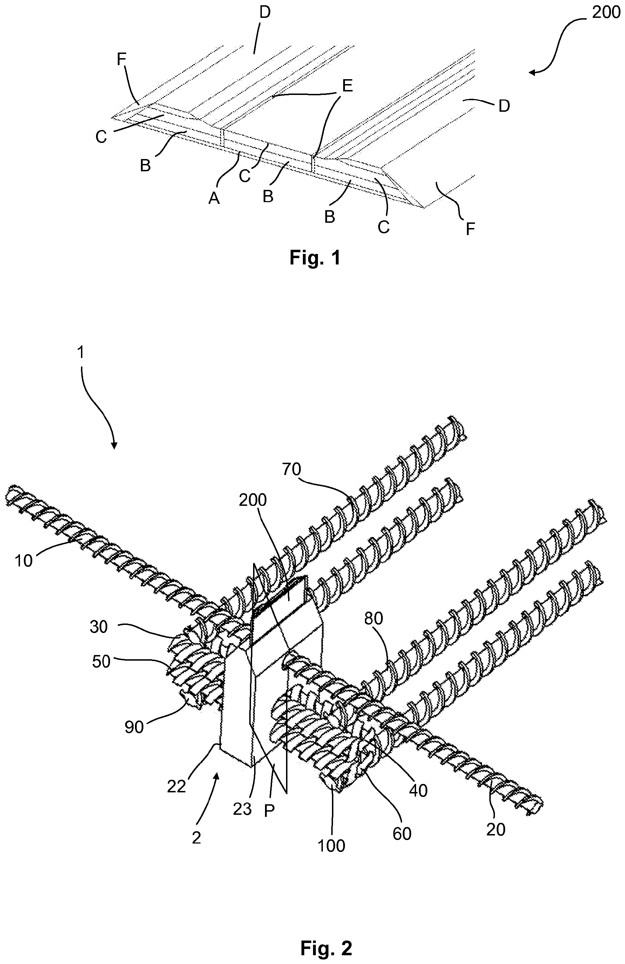

La figure 1 illustre une bande de profilé complexe 200, telle une bande de roulement pour pneumatique réalisée à base de plusieurs mélanges élastomériques pour réaliser les différentes composants A, B, C, D, E et F de la bande. Les différents mélanges arrivent en provenance des plusieurs extrudeuses 10, 20, 30, 40, 50 et 60 appartenant à une installation 1 d'extrusion (fig. 2), mélanges qui convergent ensemble dans une tête d'extrusion commune 2 pour réaliser une bande de produit profilé complexe 200 par coextrusion. La bande de profilé complexe 200 est, dans l'exemple de la figure 1, une bande de roulement pour pneumatique. Elle comprend une sous-couche A, une couche adjacente B situées au-dessus de celle-ci et une couche externe C. Deux profilés d'extrémité D complètent la couche externe C qui comporte de plus deux inserts conducteurs E. L'ensemble est finalement complété par deux bords latéraux F.

De tels mélanges élastomériques pour réaliser une bande de roulement sont, à titre d'exemple les mélanges à base d'élastomères ou de gomme utilisés pour créer un ensemble de bande de roulement tels : un premier matériau en caoutchouc naturel à 100% pour réaliser une sous-couche A, puis un deuxième matériau pour réaliser la partie externe C de la bande de roulement qui est en caoutchouc synthétique à 100% comportant par exemple de la silice, et d'un troisième matériau sans silice mais ayant des propriétés absorbantes pour former une couche intermédiaire B, suivis d'un quatrième et cinquième matériau pour réaliser les parties d'extrémité D et les bords latéraux F composés par exemple d'un mélange de caoutchouc naturel/ caoutchouc synthétique (20% à 80% de caoutchouc naturel), et d'un sixième matériau E qui est un mélange conducteur comportant un mélange de caoutchouc naturel/ caoutchouc synthétique et du noir de carbone.

Selon l'invention, la tête d'extrusion 2 de l'installation d'extrusion de l'invention reçoit une proportion de mélange élastomérique comprise entre 2 à 25% du volume total débité par l'installation à partir des extrudeuses 10 et 20 non volumétriques qui sont du type à vis d'Archimède et le reste à partir d'extrudeuses volumétriques 30, 40, 50 et 60. Les extrudeuses à vis d'Archimède 10, 20, comprennent une vis qui tourne à l'intérieur d'un fourreau coaxial à la vis en étant entraînées en rotation par un motoréducteur. Elles sont d'un encombrement moindre et ont une construction simplifiée par rapport aux extrudeuses volumétriques 30, 40, 50 60. Par ailleurs, une bande de roulement complexe est composée de produits de très petit volume, notamment l'insert conducteur E et les flancs latéraux F de la bande illustrée à la figure 1. La proportion du volume de ces composants par rapport au volume de tous les composants de la bande de roulement ou, autrement dit, la fraction volumique des composants E et F au sein de la bande de profilé 200 qui en comporte les composants A à F, est comprise entre 2 et 25%. Une telle fraction volumique est donc très faible par rapport au volume total de la bande. Or, vu que les composants qui occupent la majeure partie du volume de la bande (entre 75 et 98%) sont fournis par des extrudeuses volumétriques dont le débit est contrôlé avec précision, il en résulte que la variation du débit des extrudeuses qui fournissent les composants E et F ne conduit pas à des variations très importantes du volume total de la bande de profilé complexe 200. On obtient ainsi une installation d'extrusion 1 compacte de d'en encombrement moindre qui permet en même temps d'obtenir une bande de profilé coextrudé de dimensions assez précises.

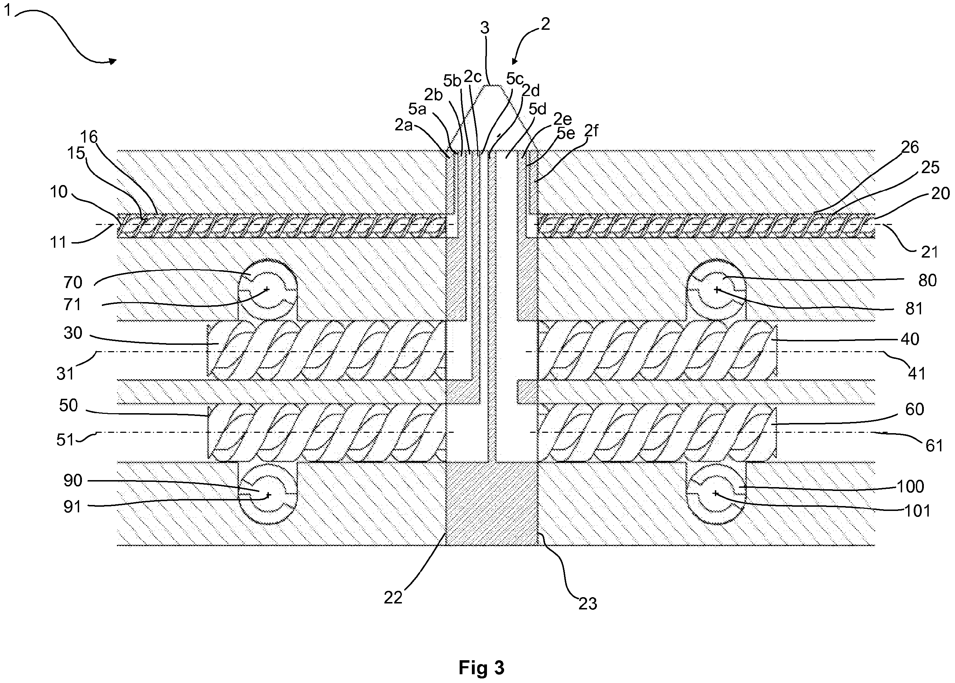

Selon un aspect avantageux de l'invention, les extrudeuses à vis d'Archimède 10, 20 sont dimensionnées de manière à ce que leur débit en fonctionnement soit le plus constant possible. Tel que mieux visible aux figures 2 et 3, l'extrudeuse 10, 20 comprend une vis 15, 25 qui tourne autour d'un axe 11, 21 à l'intérieur d'un fourreau 16, 26 en étant entrainé par un motoréducteur (non représenté). Les dimensions des vis 15, 25 sont conçues de manière à ce que leurs filets soient peu profonds et avec des pas de filets assez courts. Ainsi, le filet de chaque vis 15, 25 présente une hauteur inférieure à 0.2 fois le diamètre de la vis et un pas court, de préférence inférieur à 1.5 fois le diamètre de la vis. La longueur de chaque vis 15, 25 est choisie de manière à ce qu'elle soit supérieure à 8 fois le diamètre de la vis.

La figure 2 illustre une installation 1 d'extrusion de l'invention comprenant plusieurs extrudeuses 10, 20, 30, 40, 50, 60 pour réaliser un produit profilé par coextrusion dans une tête d'extrusion 2 commune. Le produit profilé obtenu est une bande de roulement 200 et comporte plusieurs composants, dans l'exemple illustré en nombre de six, réalisés dans des matériaux élastomériques en provenance de différentes extrudeuses. Les extrudeuses 10, 20, 30, 40, 50, 60 ont été illustrées de manière schématique en représentant uniquement leurs vis respectives, mais on comprend que, de manière généralement connue, la vis de chaque extrudeuse tourne à l'intérieur d'un fourreau muni d'une entrée d'alimentation en un mélange d'élastomères et d'une sortie qui débouche dans la tête d'extrusion 2. Les extrudeuses 10 et 20 sont du type à vis d'Archimède, comme précédemment décrit, alors que les extrudeuses 30, 40, 50 et 60 sont des extrudeuses volumétriques bi-vis à volumétriques bi-vis contrarotatives à filets interpénétrés et profils conjugués. Chaque extrudeuse volumétrique comprend deux vis parallèles qui tournent en sens contraire dans un fourreau de section en forme de huit, de manière à former des chambres étanches en forme de « C » avec les parois internes de celui-ci. Chaque extrudeuse volumétrique est alimentée par une extrudeuse d'alimentation 70, 80, 90, 100 qui est une extrudeuse du type à vis d'Archimède d'axe 71, 81, 91, 101 perpendiculaire chacun à l'axe respectif 31, 41, 51, 61 des vis des extrudeuses volumétriques. De telles extrudeuses volumétriques sont du type décrit dans la demande de brevet WO2017/109419 au nom de la demanderesse.

Les extrudeuses 10, 20, 30, 40, 50, 60 sont agencées de part et d'autre de la tête d'extrusion 2 et les axes longitudinaux des vis 10, 20 ainsi que l'axe central de chacune des extrudeuses volumétriques 30, 40, 50, 60 (par axe central on comprend parallèle à l'axe longitudinal des vis de l'extrudeuse bi-vis et passant par le centre de l'ouverture de sortie de celle-ci) sont situés dans le plan de symétrie P de la bande de roulement 200. Le plan de symétrie P est un plan vertical qui passe par le centre de gravité de la bande lorsqu'il s'agit d'un produit symétrique ou, pour un produit asymétrique, par le centre d'inertie de celui-ci. Par extrudeuses situées de part et d'autre de la tête d'extrusion, on comprend des extrudeuses qui se font face en étant agencées de part et d'autre par rapport à un plan vertical perpendiculaire au plan de symétrie P et qui passe par le centre de la tête d'extrusion 2. Un tel agencement permet d'équilibrer les flux des différentes extrudeuses qui traversent la tête d'extrusion. Dans une variante (non illustrée sur les dessins) les différentes extrudeuses sont agencées de part et d'autre de la tête d'extrusion 2 sans que leurs axes longitudinaux respectifs soit dans le plan de symétrie P. dans encore une autre variante, certaines extrudeuses sont agencées sur les côtés de la tête d'extrusion 2, voire dans la partie opposée à celle de la filière de sortie de celle-ci.

En fonctionnement, lorsque l'on alimente chaque extrudeuse avec un mélange élastomérique, les différents mélanges extrudés par les extrudeuses 10, 20, 30, 40, 50 et 60 traversent les canaux de distribution prévus à cet effet dans la tête d'extrusion 2 sans se mélanger et convergent vers une filière 3 qui donne la forme finale du produit, en l'occurrence à la bande de roulement 200.

Dans l'exemple illustré aux figures, les extrudeuses 10, 20, 30, 40, 50, 60 sont agencées avec leurs axes longitudinaux 11, 21, 31, 41, 51, 61 parallèles entre eux et perpendiculaires aux parois latérales 22, 23 de la tête d'extrusion 2, trois extrudeuses 10, 30 et 50 étant situé à droite par rapport au plan vertical médian de la tête d'extrusion et les trois autres 20, 40 et 60 à gauche de ce plan. Les extrudeuses de droite et celles de gauche se font face, elles sont situées deux à deux à une même hauteur, leurs axes longitudinaux étant situés dans un même plan. On peut toutefois agencer les extrudeuses de droite à une hauteur différente de celles de gauche. Dans une variante, les axes longitudinaux des extrudeuses ne sont pas parallèles, elles forment un angle entre eux, l'angle formé par les axes longitudinaux de deux extrudeuses adjacentes pouvant être différent de celui formé par les axes longitudinaux de deux autres extrudeuses adjacentes. Dans encore une autre variante, on peut envisager un nombre différent d'extrudeuses à droite comparé à celles situées à gauche de la tête.

La tête d'extrusion 2 est constituée par un empilage de plusieurs plaques, en nombre de six dans l'exemple illustré à la figure 5 : 2a, 2b, 2c, 2d, 2e, 2f parallèles entre elles et parallèles aux parois latérales 22, 23 de la tête d'extrusion et perpendiculaires aux axes longitudinaux des extrudeuses 10, 20, 30, 40, 50, 60. Les plaques 2a à 2f ont une longueur égale ou légèrement inférieure à celle des parois latérales 22, 23 de la tête et définissent entre elles des canaux de distribution transversaux 5a, 5b, 5c, 5d, 5e qui acheminent le mélange élastomérique en provenance des extrudeuses de l'installation vers la filière de sortie 3. Les plaques 2a à 2f sont amovibles et sont tenues ensemble et fixées aux parois latérales de la tête d'extrusion par exemple par une fixation à vis (non représentés). L'installation de la figure 2 est apte à réaliser la bande de roulement 200 à six composants de la figure 1.

Dans l'exemple illustré à la figure 3, la tête d'extrusion comprend un canal de distribution 5d qui est commun aux extrudeuses 40 et 50.

Selon un aspect avantageux de l'invention, la tête d'extrusion 2 est interchangeable et est reliée directement aux extrudeuses 10, 20, 30, 40, 50, 60 sans qu'il y ait de canal de transfert de mélange d'élastomère entre les deux. Ainsi, le choix de faire collaborer deux extrudeuses entre elles se fait en agençant la tête d'extrusion appropriée, puis à piloter les extrudeuses en fonction de la géométrie du produit que l'on veut obtenir. La quantité de produit envoyée vers la filière est réglée en agissant sur la vitesse de rotation des vis des extrudeuses. De surcroît, les extrudeuses 10, 20, 30, 40, 50, 60 débitent directement dans la tête d'extrusion 2, ce qui limite nettement les pertes de charge.

Selon un autre aspect avantageux de l'invention, les extrudeuses à vis d'Archimède 10, 20 sont identiques entre elles et les extrudeuses volumétriques, 30, 40, 50, 60 sont identiques entre elles. On facilite ainsi la maintenance de l'installation.

Par ailleurs, une disposition en vis-à-vis est avantageuse care elle diminue la taille de l'outillage dimensionnel, notamment de la tête d'extrusion, ce qui assure une meilleure ergonomie et permet en même temps de diminuer le poids de celle-ci.

En fonctionnement, on choisit une tête d'extrusion 2 munie d'une filière 3 apte à réaliser une bande de roulement 200 complexe, à base de plusieurs mélanges d'élastomères de composition différente par coextrusion de mélanges élastomériques en provenance des extrudeuses 10, 20, 30, 40, 50, 60 et on l'introduit dans un support prévu à cet effet dans l'installation 1. On verrouille la tête d'extrusion en place à l'aide des moyens de fixation rapide (non illustrés sur les figures). On réalise l'opération d'extrusion.

D'autres variantes et modes de réalisation de l'invention peuvent être envisagés sans sortir du cadre de ses revendications.

Ainsi, on peut agencer plus de six extrudeuses de part et d'autre de la tête d'extrusion, voire même sur les autres faces de la tête d'extrusion qui ne sont pas dédiées l'une à la sortie des mélanges en direction de la filière d'extrusion et l'autre à la préhension de la tête en vue de son déplacement au moins deux d'entre elles travaillant avec des mélanges différents et certaines d'autres avec un même mélange d'élastomères.

Par ailleurs, on peut utiliser d'autres types d'extrudeuses volumétriques, par exemple du type à pompes à engrenages ou à pompes à pistons.

## Revendications

1. Installation (1) d'extrusion pour fabriquer une bande de profilé complexe, telle une bande de roulement (200), à base de mélanges élastomériques par coextrusion, comportant plusieurs extrudeuses (10, 20, 30, 40, 50, 60) d'alimentation en mélanges élastomériques d'une tête d'extrusion (2), **caractérisé en ce que** la tête d'extrusion reçoit une proportion de mélange élastomérique comprise entre 2 à 25% du volume total débité par l'installation à partir d'au moins une extrudeuse à vis d'Archimède (10, 20) et le reste à partir d'extrudeuses volumétriques (30, 40, 50, 60).

2. Installation selon la revendication 1, **caractérisée en ce que** les filets de la vis de l'extrudeuse à vis d'Archimède (10, 20) sont peu profonds, la hauteur du filet étant inférieure à 0,2 la valeur du diamètre de la vis, pour un pas court, dont la valeur est inférieure à 1,5 la valeur du diamètre de la vis.

3. Installation selon l'une des revendications 1 ou 2, **caractérisée en ce que** la longueur de la vis de l'extrudeuse à vis d'Archimède (10, 20) est supérieure à 8 fois la valeur de son diamètre.

4. Installation selon l'une des revendications précédentes, **caractérisée en ce que** les extrudeuses volumétriques (30, 40, 50, 60) sont des extrudeuses volumétriques bi-vis contrarotatives à filets interpénétrés et profils conjugués.

5. Installation selon l'une des revendications précédentes, **caractérisée en ce que** la tête d'extrusion comporte des canaux de distribution des mélanges élastomériques en provenance des extrudeuses vers une filière de sortie et l'extrudeuse à vis d'Archimède (10, 20) est reliée à la filière de sortie par un canal de longueur inférieure à celle des canaux de distribution des autres extrudeuses (30, 40, 50, 60).

6. Installation (1) selon la revendication précédente, **caractérisée en ce que** les canaux de distribution s'étendent dans une direction sensiblement perpendiculaire à la direction d'écoulement des flux des mélanges élastomériques en provenance desdites extrudeuses.

7. Installation selon l'une des revendications précédentes, **caractérisée en ce que** les extrudeuses (10, 20, 30, 40, 50, 60) sont agencées de part et d'autre de la tête par rapport à un plan de symétrie (P) passant par l'orifice de sortie de la filière (2).

8. Installation selon l'une des revendications précédentes, **caractérisée en ce que** la tête d'extrusion (2) est reliée directement aux extrudeuses (10, 20, 30, 40, 50, 60) sans qu'il y ait de canal de transfert de mélange d'élastomère entre les deux.

9. Installation selon l'une des revendications précédentes, **caractérisée en ce que** les extrudeuses à vis d'Archimède (10, 20) sont identiques et **en ce que** les extrudeuses volumétriques (30, 40, 50, 60) sont identiques.

10. Installation selon l'une des revendications précédentes, **caractérisée en ce que** la tête d'extrusion (2) comprend un ensemble de plusieurs plaques amovibles disposées côte-à-côte.

11. Procédé de fabrication de bande de profilé, telle une bande de roulement (200) à à base de mélanges élastomériques par coextrusion à l'aide d'une installation comportant plusieurs extrudeuses (10, 20, 30, 40, 50, 60) d'alimentation en mélanges élastomériques d'une tête d'extrusion (2), **caractérisé en ce qu'**on fait passer simultanément à travers la tête d'extrusion une proportion de mélange élastomérique comprise entre 2 à 25% du volume total débité par l'installation à partir d'au moins une extrudeuse à vis d'Archimède (10, 20) et le reste à partir d'extrudeuses volumétriques (30, 40, 50, 60).

## Patentansprüche

1. Extrusionsanlage (1) zum Herstellen eines komplexen Profilstreifens wie eines Laufstreifens (200) auf der Basis von Elastomermischungen durch Coextrusion, umfassend mehrere Extruder (10, 20, 30, 40, 50, 60) zum Zuführen von Elastomermischungen zu einem Extrusionskopf (2), **dadurch gekennzeichnet, dass** der Extrusionskopf einen Elastomermischungsanteil zwischen 2 und 25 % des von der Anlage ausgegebenen Gesamtvolumens aus mindestens einem Schneckenextruder (10, 20) und den Rest aus volumetrischen Extrudern (30, 40, 50, 60) erhält.

2. Anlage nach Anspruch 1, **dadurch gekennzeichnet, dass** die Gewinde der Schnecke des Schneckenextruders (10, 20) wenig tief sind, wobei die Höhe des Gewindes weniger als 0,2 des Werts des Durchmessers der Schnecke beträgt, bei einer kurzen Steigung, deren Wert weniger als 1,5 des Werts des Durchmessers der Schnecke beträgt.

3. Anlage nach einem der Ansprüche 1 oder 2, **dadurch gekennzeichnet, dass** die Länge der Schnecke des Schneckenextruders (10, 20) mehr als das 8-Fache des Werts ihres Durchmessers beträgt.

4. Anlage nach einem der vorhergehenden Ansprüche, **dadurch gekennzeichnet, dass** die volumetrischen Extruder (30, 40, 50, 60) gegenlaufende Doppelschneckenextruder mit ineinandergreifenden Gewinden und konjugiert ausgebildeten Profilen sind.

5. Anlage nach einem der vorhergehenden Ansprüche, **dadurch gekennzeichnet, dass** der Extrusionskopf Kanäle zur Verteilung der aus den Extrudern kommenden Elastomermischungen hin zu einer Auslassdüse umfasst und der Schneckenextruder (10, 20) mit der Auslassdüse durch einen Kanal mit einer Länge verbunden ist, die geringer als die der Verteilungskanäle der anderen Extruder (30, 40, 50, 60) ist.

6. Anlage (1) nach dem vorhergehenden Anspruch, **dadurch gekennzeichnet, dass** sich die Verteilungskanäle in eine Richtung erstrecken, die im Wesentlichen senkrecht zu der Fließrichtung der von den Extrudern kommenden Ströme der Elastomermischungen verläuft.

7. Anlage nach einem der vorhergehenden Ansprüche, **dadurch gekennzeichnet, dass** die Extruder (10, 20, 30, 40, 50, 60) beidseits des Kopfes in Bezug auf eine Symmetrieebene (P) angeordnet sind, die durch die Auslassöffnung der Düse (2) verläuft.

8. Anlage nach einem der vorhergehenden Ansprüche, **dadurch gekennzeichnet, dass** der Extrusionskopf (2) direkt mit den Extrudern (10, 20, 30, 40, 50, 60) verbunden ist, ohne dass es einen Elastomermischungstransferkanal zwischen den beiden gibt.

9. Anlage nach einem der vorhergehenden Ansprüche, **dadurch gekennzeichnet, dass** die Schneckenextruder (10, 20) identisch sind und dass die volumetrischen Extruder (30, 40, 50, 60) identisch sind.

10. Anlage nach einem der vorhergehenden Ansprüche, **dadurch gekennzeichnet, dass** der Extrusionskopf (2) eine Anordnung aus mehreren nebeneinander angeordneten abnehmbaren Platten umfasst.

11. Verfahren zur Herstellung eines komplexen Profilstreifens wie eines Laufstreifens (200) auf der Basis von Elastomermischungen durch Coextrusion, umfassend mehrere Extruder (10, 20, 30, 40, 50, 60) zum Zuführen von Elastomermischungen zu einem Extrusionskopf (2), **dadurch gekennzeichnet, dass** man gleichzeitig durch den Extrusionskopf hindurch einen Elastomermischungsanteil zwischen 2 und 25 % des von der Anlage ausgegebenen Gesamtvolumens aus mindestens einem Schneckenextruder (10, 20) und den Rest aus volumetrischen Extrudern (30, 40, 50, 60) leitet.

## Claims

1. Extrusion installation (1) for the manufacture of a complex profiled-element strip such as a tread (200), based on elastomer compounds by co-extrusion, and comprising multiple extruders (10, 20, 30, 40, 50, 60) feeding elastomer compounds to an extrusion head (2), **characterized in that** the extrusion head receives a proportion of elastomer compound of between 2 and 25% of the total volumetric throughput of the installation from at least one Archimedean-screw extruder (10, 20), and the rest from positive-displacement extruders (30, 40, 50, 60).

2. Installation according to Claim 1, **characterized in that** the flights of the screw of the Archimedean-screw extruder (10, 20) are shallow, the height of the flight being less than 0.2 the value of the diameter of the screw, for a short pitch, the value of which is less than 1.5 the value of the diameter of the screw.

3. Installation according to one of Claims 1 and 2, **characterized in that** the length of the screw of the Archimedean-screw extruder (10, 20) is greater than 8 times the value of its diameter.

4. Installation according to one of the preceding claims, **characterized in that** the positive-displacement extruders (30, 40, 50, 60) are positive-displacement counter-rotating twin-screw extruders with intermeshing screw flights with conjugated profiles.

5. Installation according to one of the preceding claims, **characterized in that** the extrusion head comprises ducts for distributing the elastomer compounds coming from the extruders toward an outlet die, and the Archimedean-screw extruder (10, 20) is connected to the outlet die by a duct of a length less than that of the distribution ducts of the other extruders (30, 40, 50, 60).

6. Installation (1) according to the preceding claim, **characterized in that** the distribution ducts extend in a direction substantially perpendicular to the direction in which the flows of elastomer compounds coming from said extruders flow.

7. Installation according to one of the preceding claims, **characterized in that** the extruders (10, 20, 30, 40, 50, 60) are arranged on either side of the head with respect to a plane of symmetry (P) passing through the outlet orifice of the die (2).

8. Installation according to one of the preceding claims, **characterized in that** the extrusion head (2) is connected to the extruders (10, 20, 30, 40, 50, 60) directly, without there being an elastomer-compound transfer duct between the two.

9. Installation according to one of the preceding claims, **characterized in that** the Archimedean-screw extruders (10, 20) are identical and **in that** the positive-displacement extruders (30, 40, 50, 60) are identical.

10. Installation according to one of the preceding claims, **characterized in that** the extrusion head (2) comprises a collection of several removable plates arranged side by side.

11. Method for the manufacture of a strip of a profiled element, such as a tread (200), based on elastomer compounds by co-extrusion, using an installation comprising multiple extruders (10, 20, 30, 40, 50, 60) feeding elastomer compounds to an extrusion head (2), **characterized in that** a proportion of elastomer compound of between 2 and 25% of the total volumetric throughput of the installation, coming from at least one Archimedean-screw extruder (10, 20), and the rest coming from positive-displacement extruders (30, 40, 50, 60), are passed simultaneously through the extrusion head.
